# FASCICULE DE BREVET EUROPEEN

(11) **EP 0 532 414 B1**
(45) Date de publication et mention de la délivrance du brevet: **22.03.1995**
(21) Numéro de dépôt: 92402470.6
(22) Date de dépôt: 10.09.1992
(51) Int. Cl.: B62D 25/14, H01R 23/70

(54) **Assemblage d'un module de tableau de bord et d'une platine de servitude**
Zusammenbau eines Armaturenbrettmoduls und einer Hilfsplatine
Assembly of a dashboard module and an auxiliary plate

(30) Priorité: 11.09.1991 FR 9111214
(43) Date de publication de la demande: 17.03.1993
(73) Titulaire: SOCIETE D'APPLICATIONS GENERALES D'ELECTRICITE ET DE MECANIQUE SAGEM, F-75783 Paris Cédex 16 (FR)
(72) Inventeur: Monnier, Christian, F-95300 Pontoise (FR)
(74) Mandataire: Bloch, Gérard

(56) Documents cités:
- DE-A- 3 414 025
- FR-A- 2 609 268

## Description

La présente invention concerne un assemblage de module de tableau de bord de véhicule et de platine de servitude, du type défini par le preambule de la revendication 1.

Un module de tableau de bord comporte généralement un mouvement, duquel peut être solidaire une aiguille de cadran et qui est monté sur une boîte à lumière pour éclairer l'aiguille.

Une platine de servitude comporte des composants, tels que relais, commutateurs, etc., branchés électriquement entre le ou les modules de tableau de bord et les équipements électriques du véhicule, tels que feux, clignotants, capteurs, etc., reliés par ailleurs aux modules de tableau de bord.

Les connexions électriques entre les équipements électriques du véhicule, d'une part, et le tableau de bord et la platine, d'autre part, s'effectuent essentiellement par des torons.

La connexion électrique, entre un module de tableau de bord, équipé d'un flexible à pistes conductrices imprimées ou d'un circuit imprimé rigide, et la platine de servitude, s'effectue par une connectique délicate à implanter en raison des pièces nécessaires à la connexion et du peu de place qui lui est offerte.

L'invention que la demanderesse propose ici est la solution au problème qu'elle s'était posé de connecter électriquement un module de tableau de bord et une platine de servitude assemblés mécaniquement l'un à l'autre, alors que précisément la place offerte à la connectique, dans un tel assemblage, est quasiment annulée.

La présente invention concerne donc un assemblage d'un module de tableau de bord, d'un véhicule pourvu d'équipements électriques, et d'une platine de servitude, le module étant pourvu de pistes conductrices de liaison électrique à la platine et aux équipements, et la platine, de conducteurs de liaison au module et aux équipements électriques, caractérisé par le fait que le module et la platine sont mécaniquement assemblés l'un à l'autre, les conducteurs de liaison de la platine au module et aux équipements sont disposés sur un support commun et il est prévu des moyens rigides de coopération mécanique et électrique entre les pistes du module et les conducteurs du support de la platine.

L'invention est intéressante car elle permet l'assemblage d'un module de tableau de bord à une platine, sans avoir pratiquement rien à modifier du module, et en tout cas pas ses pistes de liaison électrique, ni à procéder à un quelconque sertissage, vissage, soudage.

De préférence, lesdits moyens rigides de coopération participent au maintien mécanique de l'assemblage.

Dans ce cas, le module peut être enfiché dans la platine par des clips conducteurs de renvoi électrique retenus par le module et coopérant élastiquement avec le support des conducteurs de liaison de la platine.

Avantageusement, le support des conducteurs de liaison de la platine s'étend à travers des premiers logements, ménagés dans la platine, de réception de branches des clips, et fait saillie dans un second logement, aussi ménagé dans la platine, de réception de moyens de connexion du module et de la platine aux équipements électriques du véhicule.

Dans la forme de réalisation préférée de l'assemblage de l'invention, le support des conducteurs de la platine est coudé et comporte une première partie, s'étendant sensiblement parallèlement aux pistes de liaison du module, et une seconde partie, s'étendant à travers lesdits premiers logements et les clips du module sont aussi coudés et comportent, chacun, une première partie, pressée contre une des pistes de liaison du module, et une deuxième partie, pincée par la deuxième partie du support de la platine et assurant la mise en pression de la première partie du clip contre la piste correspondante du module.

L'invention sera mieux comprise à l'aide de la description suivante de la forme de réalisation préférée de l'assemblage de l'invention, en référence au dessin annexé, sur lequel
- la figure 1 est une vue partielle en perspective éclatée et en partie arrachée du module et de la platine de l'assemblage de l'invention et
- la figure 2 est une vue en coupe de l'assemblage de l'invention.

L'assemblage de l'invention comporte un module de tableau de bord 1 de véhicule et une platine de servitude 2. On n'a représenté au dessin que les parties des deux pièces nécessaires à la compréhension de l'invention, c'est-à-dire du module 1, la plaque arrière 3 d'une boîte à lumière, support de pistes conductrices 4 de liaison à la platine et à des équipements électriques du véhicule et, de la platine 2, la partie dans laquelle est enfiché le module et qui comporte un support 5 de conducteurs de liaison des composants de la platine au module 1 et aux équipements électriques du véhicule.

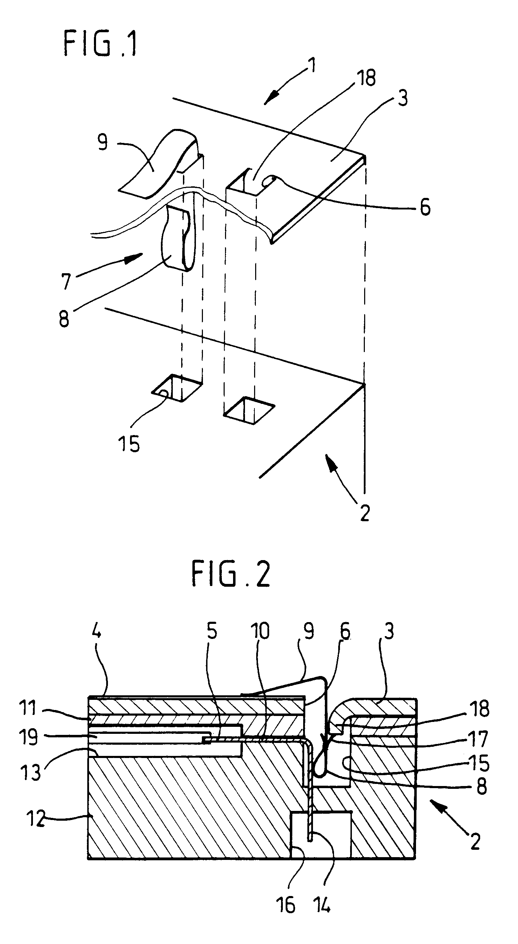

La plaque de module 3 comporte des ouvertures 6 (deux sont représentées sur la figure 1) ménagées par repoussement de la matière d'une languette 18, pour le passage, dans chacune d'elle, d'un clip 7 d'enfichage et de renvoi électrique en matériau rigide conducteur (un seul est représenté sur la figure 1). Chaque clip 7 est coudé et comporte une branche d'enfichage 8, recourbée sur elle-même pour former ressort, et une branche destinée à venir en appui contre l'une des pistes 4. Chaque clip 7 comporte un ergot 17 de retenue par la languette 18 pour le solidariser ainsi au module.

Le support 5 de la platine est aussi coudé et comporte une première branche 10, maintenue entre une plaque supérieure 11 et un socle 12, s'étendant ici parallèlement aux pistes 4 du module 1 et faisant saillie dans un évidement 13, ménagé par la plaque 11 et le socle 12 et destiné à recevoir des organes 19 de connexion aux composants de la platine. Le support 5 comporte une seconde branche 14, ici sensiblement à angle droit de la première, traversant une série de logements 15, ménagés par la plaque 11 et le socle 12, de réception des clips 7 et faisant saillie dans un autre logement 16 du socle 12 destiné à recevoir des organes de connexion du module et de la platine aux équipements électriques du véhicule.

Le module 1 est enfiché sur la platine 2 par ses clips 7. Une fois le module 1 posé sur la platine 2, les évidements 6 en face des logements 15, on introduit les clips 7 dans les logements 15 par leur branche d'enfichage 8 qui glisse contre la branche 14 du support 5 en la contraignant et la pinçant légèrement et élastiquement, jusqu'à ce que l'ergot 17 passe sous la plaque 3 et que la branche 9 soit ainsi légèrement pressée contre la piste de liaison correspondante 4 du module et assure, outre le maintien mécanique de l'assemblage, le renvoi électrique des pistes 4 du module aux conducteurs du support 5 de la platine.

## Revendications

1. Assemblage d'un module (1) de tableau de bord, d'un véhicule pourvu d'équipements électriques, et d'une platine de servitude (2), le module étant pourvu de pistes conductrices (4), de liaison électrique à la platine et aux équipements, et la platine, de conducteurs de liaison au module et aux équipements électriques, caractérisé par le fait que le module (1) et la platine (2) sont mécaniquement assemblés l'un à l'autre, les conducteurs de liaison de la platine au module et aux équipements sont disposés sur un support commun (5) et il est prévu des moyens rigides (7) de coopération mécanique et électrique entre les pistes (4) du module (1) et les conducteurs du support (5) de la platine (2).

2. Assemblage selon la revendication 1, dans lequel lesdits moyens rigides (7) de coopération participent au maintien mécanique de l'assemblage.

3. Assemblage selon la revendication 2, dans lequel le module (1) est enfiché dans la platine (2) par des clips conducteurs (7) de renvoi électrique retenus (17) par le module (1) et coopérant élastiquement (8) avec le support (5) des conducteurs de liaison de la platine (2).

4. Assemblage selon la revendication 3, dans lequel le support (5) des conducteurs de liaison de la platine (2) s'étend à travers des premiers logements (15), ménagés dans la platine (2), de réception de branches (8) des clips (7), et fait saillie dans un second logement (16), aussi ménagé dans la platine, de réception de moyens de connexion du module et de la platine aux équipements électriques du véhicule.

5. Assemblage selon la revendication 4, dans lequel le support (5) des conducteurs de la platine (2) est coudé et comporte une première partie (10), s'étendant sensiblement parallèlement aux pistes de liaison (4) du module (1), et une seconde partie (14), s'étendant à travers lesdits premiers logements (15) et les clips (7) du module (1) sont aussi coudés et comportent, chacun, une première partie (9), pressée contre une des pistes de liaison (4) du module (1), et une deuxième partie (8), pincée par la deuxième partie (14) du support (5) de la platine (2) et assurant la mise en pression de la première partie (9) du clip contre la piste correspondante (4) du module (1).

## Claims

1. Assembly of a dashboard module (1), of a vehicle provided with electrical equipment, and of a service plate (2), the module being provided with conducting paths (4), for electrical connection to the plate and to the equipment, and the plate being provided with conductors for connection to the module and to the electrical equipment, characterised by the fact that the module (1) and the plate (2) are mechanically assembled one to the other, the conductors connecting the plate to the module and to the equipment are disposed on a common support (5) and rigid means (7) are provided for mechanical and electrical cooperation between the paths (4) of the module (1) and the conductors of the support (5) for the plate (2).

2. Assembly according to claim 1, in which said rigid cooperation means (7) participate in the mechanical maintenance of the assembly.

3. Assembly according to claim 2, in which the module (1) is plugged into the plate (2) by electrical return conductor clips (7) retained (17) by the module (1) and cooperating elastically (8) with the support (5) for the conductors connecting the plate (2).

4. Assembly according to claim 3, in which the support (5) for the conductors connecting the plate (2) extends through first housings (15), provided in the plate (2), for receiving arms (8) of the clips (7) and projects into a second housing (16), also provided in the plate, for receiving means for the connection of the module and of the plate to the electrical equipment of the vehicle.

5. Assembly according to claim 4, in which the support (5) for the conductors of the plate (2) is bent and comprises a first part (10) extending substantially parallel to the connection paths (4) of the module (1), and a second part (14), extending through said first housings (15) and the clips (7) of the module (1) are also bent and each comprise a first part (9), pressed against one of the connection paths (4) of the module (1), and a second part (8), gripped by the second part (14) of the support (5) for the plate (2) and ensuring the pressing of the first part (9) of the clip against the corresponding path (4) of the module (1).

## Patentansprüche

1. Zusammenbau eines Armaturenbrettmoduls (1) eines mit einer Elektrik ausgestatteten Fahrzeugs und einer Hilfsplatine (2), wobei der Modul mit Leiterbahnen (4) für die elektrische Verbindung mit der Platine und mit der Elektrik versehen ist und die Platine mit Leitern für die Verbindung mit dem Modul und mit der Elektrik, dadurch gekennzeichnet, daß der Modul (1) und die Platine (2) mechanisch aneinandergefügt werden, die Leiter für die Verbindung der Platine mit dem Modul und mit der Elektrik auf einem gemeinsamen Träger (5) angeordnet sind und starre Mittel (7) für das mechanische und elektrische Zusammenwirken zwischen den Bahnen (4) des Moduls (1) und den Leitern des Trägers (5) der Platine (2) vorgesehen sind.

2. Zusammenbau nach Anspruch 1, bei dem die starren Mittel (7) für das Zusammenwirken an dem mechanischen Zusammenhalt der Verbindung beteiligt sind.

3. Zusammenbau nach Anspruch 2, bei dem der Modul (1) mittels leitender Klemmen (7) für den elektrischen Anschluß, die von dem Modul (1) festgehalten (17) werden und elastisch (8) mit dem Träger (5) der Verbindungsleiter der Platine (2) zusammenwirken, in die Platine (2) gesteckt wird.

4. Zusammenbau nach Anspruch 3, bei dem sich der Träger (5) der Verbindungsleiter der Platine (2) quer durch erste in der Platine (2) vorgesehene Aussparungen (15) für die Aufnahme der Schenkel (8) der Klemmen (7) erstreckt und in eine ebenfalls in der Platine vorgesehene zweite Aussparung (16) für die Aufnahme von Mitteln zum Anschluß des Moduls und der Platine an die Elektrik des Fahrzeugs ragt.

5. Zusammenbau nach Anspruch 4, bei dem der Träger (5) der Leiter der Platine (2) winkelförmig ist und einen ersten Teil (10), der sich im wesentlichen parallel zu den Verbindungsbahnen (4) des Moduls (1) erstreckt, sowie einen zweiten Teil (14), der sich quer durch die ersten Aussparungen (15) erstreckt, umfaßt und die Klemmen (7) des Moduls (1) ebenfalls winkelförmig sind und jeweils einen ersten Teil (9), der gegen eine der Verbindungsbahnen (4) des Moduls (1) gepreßt wird, sowie einen zweiten Teil (8) umfassen, der von dem ersten Teil (14) des Trägers (5) der Platine (2) geklemmt wird und gewährleistet, daß der erste Teil (9) der Klemme gegen die entsprechende Bahn (4) des Moduls gedrückt wird.
